# EUROPÄISCHE PATENTANMELDUNG

(11) **EP 4 696 130 A1**
(43) Veröffentlichungstag der Anmeldung: **18.02.2026**
(21) Anmeldenummer: 25187187.7
(22) Anmeldetag: 03.07.2025
(51) Int. Cl.: A01F 12/44

(54) **MÄHDRESCHER**

(30) Priorität: 12.08.2024 DE 102024122916
(71) Anmelder: CLAAS Selbstfahrende Erntemaschinen GmbH, 33428 Harsewinkel (DE)
(72) Erfinder: Vieregge, Christopher, 32694 Dörentrup (DE); Pölling, Benedikt, 48653 Coesfeld (DE); Beckmann, Hermann-Konstantin, 32584 Löhne (DE); Diekamp, Andreas, 49176 Hilter (DE); Pickhinke, Paul, 48361 Beelen (DE); Ackfeld, Lukas, 59329 Wadersloh (DE); Taucher, Christian, 31737 Rinteln (DE); Brandmeier, Jonas, 33428 Harsewinkel (DE); Lehmberg, Andreas, 33428 Harsewinkel (DE)
(74) Vertreter: CLAAS Gruppe

(57) **Zusammenfassung**

Die vorliegende Erfindung betrifft einen Mähdrescher (1), umfassend eine Dreschvorrichtung (2), eine Abscheidevorrichtung (3) sowie eine Reinigungsvorrichtung (4), welche Siebe (10) sowie eine den Sieben (10) der Reinigungsvorrichtung (4) nachgeordnete Sauggebläseanordnung (12) mit zumindest einem Sauggebläse (13) aufweist, welches von einem Gehäuse (14) umschlossen ist, in welchem ein Läufer (19) des zumindest einen Sauggebläses (13) um eine vertikale Rotationsachse (15) rotiert, um einen Saugluftstrom (11) aus einem zumindest die Reinigungsvorrichtung (4) umgebenden Prozessraum (17) des Mähdreschers (1) anzusaugen, wobei der Läufer (19) mit mehreren radial orientierten Schaufeln (20) versehen ist, die von einer Grundplatte (21) des Läufers (19) im Wesentlichen vertikal aufragen, wobei der Läufer (19) durch zumindest eine zur Grundplatte (21) parallel angeordnete Abdeckung (22) obenseitig begrenzt ist, wobei die Sauggebläseanordnung (12) einen aus der Sauggebläseanordnung (12) austretenden Luft- und Erntegutstrom durch eine Auswurföffnung (27) einem sich an das Gehäuse (14) anschließenden Auswurfkanal (18) zuführt, wobei das Gehäuse (14) zumindest abschnittsweise spiralförmig ausgeführt ist und dass das Gehäuse (14) innenseitig eine im Bereich der Auswurföffnung (27) an der Abdeckung (24) ausgebildete, sich abschnittsweise in Umfangsrichtung des Gehäuses (14) erstreckende und zur Rotationsachse (15) geneigte obere Fase (32) aufweist.

## Beschreibung

Die vorliegende Erfindung betrifft einen Mähdrescher gemäß dem Oberbegriff des Anspruches 1.

Ein Mähdrescher der eingangs genannten Art ist aus der DE 10 2022 102 795 A1 bekannt. Der Mähdrescher weist eine Dreschvorrichtung, eine Abscheidevorrichtung, sowie eine Reinigungsvorrichtung auf, welche Siebe sowie eine den Sieben der Reinigungsvorrichtung nachgeordnete Sauggebläseanordnung mit zumindest einem Sauggebläse umfasst. Die Sauggebläseanordnung weist ein Gehäuse auf, in welchem ein Läufer des Sauggebläses um eine vertikale Achse rotiert, um einen Saugluftstrom aus einem zumindest die Reinigungsvorrichtung umgebenden Prozessraum des Mähdreschers anzusaugen, welcher die Siebe der Reinigungsvorrichtung durchströmt. Der Läufer ist mit mehreren radial orientierten Schaufeln versehen, die von einer Grundplatte des Läufers im Wesentlichen vertikal aufragen. Von der Reinigungsvorrichtung abgeschiedene Nichtkornbestandteile, insbesondere Spreu, Kurzstroh oder dergleichen, werden dabei vom Saugluftstrom mitgeführt und durchströmen die Sauggebläseanordnung, um im rückwärtigen Bereich des Mähdreschers ausgeschieden zu werden. Dies erfolgt unmittelbar durch die Sauggebläseanordnung als Verteilvorrichtung, welche die Nichtkornbestandteile durch einen Auswurfkanal ausbringt. Ein weiterer Aspekt der DE 10 2022 102 795 A1 besteht in der Nutzung der Sauggebläseanordnung zur Erzeugung eines Unterdrucks zur Absaugung der Oberfläche einer einem Kühlventilator eines Antriebsmotors zugeordneten Siebeinrichtung. Diese Mehrfachnutzung der Sauggebläseanordnung erfordert eine hohe Saugleistung des zumindest einen Sauggebläses. Für die Funktion der Sauggebläseanordnung mit dem Saugluftstrom Nichtkornbestandteile, welche den zumindest ein Läufer des Sauggebläses passieren, zu fördern und zu verteilen, weisen die Schaufeln in axialer Richtung einen größeren Abstand zur Abdeckung auf als ein Läufer eines Sauggebläses, welches keine Nichtkornbestandteile fördert. Mit dem größeren Abstand der Schaufeln zur Abdeckung geht eine reduzierte Saugleistung des Sauggebläses einher.

Ausgehend vom vorstehend genannten Stand der Technik liegt der Erfindung die Aufgabe zugrunde, einen Mähdrescher der eingangs genannten Art weiterzubilden, dessen Sauggebläse sich durch ein verbessertes Strömungsverhalten und eine Minimierung von Ablagerungen im Gehäuse auszeichnet.

Diese Aufgabe wird erfindungsgemäß durch einen Mähdrescher mit den Merkmalen des Anspruches 1 gelöst. Vorteilhafte Weiterbildungen sind Gegenstand der abhängigen Ansprüche.

Gemäß dem Anspruch 1 wird ein Mähdrescher vorgeschlagen, der eine Dreschvorrichtung, eine Abscheidevorrichtung sowie eine Reinigungsvorrichtung umfasst, welche Siebe sowie eine den Sieben der Reinigungsvorrichtung nachgeordnete Sauggebläseanordnung mit zumindest einem Sauggebläse aufweist, welches von einem Gehäuse umschlossen ist, in welchem ein Läufer des zumindest einen Sauggebläses um eine vertikale Rotationsachse rotiert, um einen Saugluftstrom aus einem zumindest die Reinigungsvorrichtung umgebenden Prozessraum des Mähdreschers anzusaugen, wobei der Läufer mit mehreren radial orientierten Schaufeln versehen ist, die von einer Grundplatte des Läufers im Wesentlichen vertikal aufragen, wobei der Läufer durch zumindest eine zur Grundplatte parallel angeordnete Abdeckung obenseitig begrenzt ist, wobei die Sauggebläseanordnung einen aus dem zumindest einen Sauggebläse austretenden Luft- und Erntegutstrom durch eine Auswurföffnung einem sich an das Gehäuse anschließenden Auswurfkanal zuführt. Erfindungsgemäß ist vorgesehen, dass das Gehäuse zumindest abschnittsweise spiralförmig ausgeführt ist und dass das Gehäuse innenseitig eine im Bereich der Auswurföffnung an der Abdeckung ausgebildete, sich abschnittsweise in Umfangsrichtung des Gehäuses erstreckende und zur Rotationsachse geneigte obere Fase aufweist.

Durch die zumindest abschnittsweise spiralförmige Ausführung des Gehäuses wird eine Verbesserung der Saugleistung erreicht, indem durch das sich abschnittsweise in Rotationsrichtung erweiternde Gehäuse eine Reduzierung des Strömungswiderstands erreicht wird. Durch die obere Fase im Bereich der Auswurföffnung wird einer Ansammlung des Ernteguts an der Unterseite der Abdeckung entgegengewirkt. Hierzu fächert die obere Fase den Nichtkornbestandteile enthaltenden Saugluftstrom auf bzw. lenkt diesen in Richtung der Grundplatte nach unten ab. Dadurch werden Ablagerung vermieden bzw. sich dort ablagernde Nichtkornbestandteile gelöst.

Insbesondere kann die an der Abdeckung ausgebildete obere Fase ausgehend von der Auswurföffnung und entgegen einer Rotationsrichtung des Läufers einen sich verjüngenden Verlauf aufweisen.

Bevorzugt kann sich die obere Fase entlang eines Kreisbogens mit einem Mittelpunktswinkel kleiner 180° erstrecken. Insbesondere kann sich die obere Fase im Wesentlichen über die Breite der Auswurföffnung erstrecken.

Gemäß einer bevorzugten Weiterbildung kann das spiralförmig ausgeführte Gehäuse einen axialen Spiralabschnitt und einen radialen Spiralabschnitt aufweisen, die einen sich zur Auswurföffnung hin aufweitenden Kanal ausbilden. Das spiralförmig ausgeführte Gehäuse bewirkt eine erhebliche Verbesserung der erforderlichen Saugleistung des Sauggebläses, wodurch die Mehrfachnutzung der Sauggebläseanordnung verbessert wird. Das sich durch den axialen Spiralabschnitt und den radialen Spiralabschnitt abschnittsweise erweiternde Gehäuse reduziert den Strömungswiderstand. Die nur abschnittsweise Erweiterung des Gehäuses hat den weiteren Vorteil, dass der Bauraumbedarf gering gehalten werden kann.

Hierbei kann der radiale Spiralabschnitt durch einen in Rotationsrichtung zunehmenden Radius einer den Läufer abschnittsweise in Umfangsrichtung umgebenden Mantelfläche gebildet sein. Der radiale Abstand der Mantelfläche zur Rotationsache des Läufers nimmt dabei in Rotationsrichtung zur Auswurföffnung hin zu.

Des Weiteren kann der axiale Spiralabschnitt durch eine zur Grundplatte koaxiale und unter einem Winkel zur Rotationsachse geneigte Leitfläche gebildet sein, welche das Gehäuse in Rotationsrichtung des Läufers in axialer Richtung zunehmend erweitert. Die Leitfläche kann als separates Bauteil ausgeführt sein. Die als separates Bauteil ausgeführte Leitfläche kann an der das Gehäuse obenseitig begrenzenden Abdeckung unter einem Winkel geneigt angeordnet sein. Denkbar ist auch, dass die Abdeckung auf ihrer der Grundplatte zugewandten Unterseite einen rampenförmigen Abschnitt aufweist, der die geneigte Leitfläche ausbildet.

Gemäß einer bevorzugten Weiterbildung kann die obere Fase durch ein geneigt zur Mantelfläche angeordnetes Leitblech ausgebildet sein, welches sich ausgehend von der Leitfläche in Richtung der Mantelfläche erstreckt. Das Leitblech kann eine konkave Kontur oder eine geradlinige Kontur aufweisen.

Bevorzugt kann die den Läufer umgebende Mantelfläche des Gehäuses an ihrer der Auswurföffnung gegenüberliegenden Seite eine untere Fase aufweisen, die sich ausgehend von einem zur Grundplatte parallelen Bodensegment abschnittsweise in Richtung der zum Bodensegment parallel verlaufenden Abdeckung erstreckt und in radialer Richtung abschnittsweise zunimmt.

Weiterhin kann sich die vom Bodensegment ausgehende untere Fase entlang eines Kreisbogens mit einem Mittelpunktswinkel kleiner 180° erstrecken.

Insbesondere können in Umfangsrichtung der Mantelfläche auslaufende Enden der unteren Fase sich verjüngend ausgebildet sein. Der radiale Abstand der unteren Fase zum Hüllkreis der Schaufeln nimmt dabei zu den randseitigen Enden der unteren Fase hin zu. Dabei kann das der Auswurföffnung zugewandte Ende der unteren Fase einen größeren radialen Abstand zum Hüllkreis aufweisen als das der Auswurföffnung zugewandte Ende der unteren Fase.

Gemäß einer Weiterbildung können die von der Grundplatte im Wesentlichen vertikal aufragenden Schaufeln, ausgehend von der Rotationsachse, einen in axialer Richtung abschnittsweise ansteigenden Konturverlauf ihrer der Abdeckung zugewandten Oberkante aufweisen, der in einen zur Abdeckung parallelen Konturverlauf der Oberkante im Randbereich der Schaufeln übergeht.

Die vorliegende Erfindung wird nachstehend anhand eines in den Zeichnungen dargestellten Ausführungsbeispieles näher erläutert.

Es zeigen:
- Fig. 1: schematisch und exemplarisch eine Darstellung eines Mähdreschers mit einer Sauggebläseanordnung in einer Teilansicht;
- Fig. 2: schematisch und exemplarisch eine Schnittansicht eines einen Läufer eines Sauggebläses umgebenden Gehäuses der Sauggebläseanordnung;
- Fig. 3: schematisch und exemplarisch eine Ansicht auf die Läufer der Sauggebläse;
- Fig. 4: schematisch und exemplarisch eine Schnittansicht eines der Läufer; und
- Fig. 5: schematisch und exemplarisch eine perspektivische Ansicht auf die Sauggebläseanordnung.

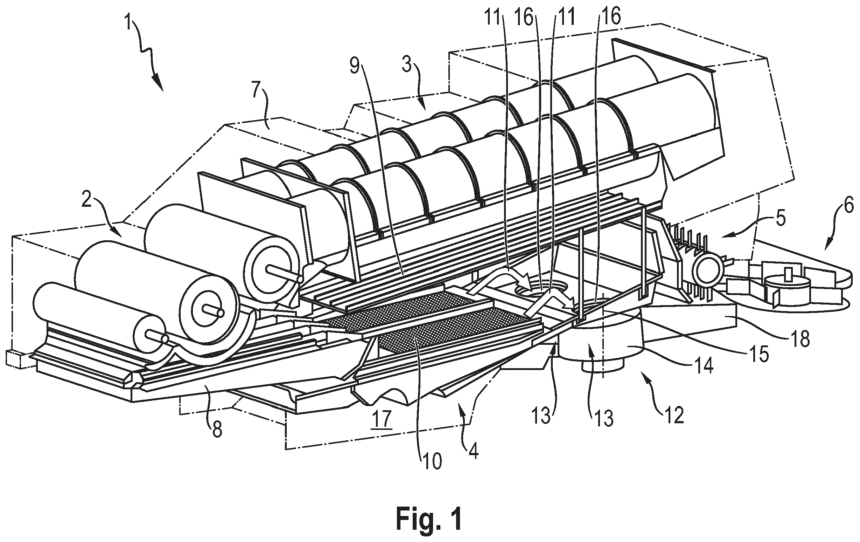

In Fig. 1 ist schematisch und exemplarisch eine Darstellung eines Mähdreschers 1 mit einer Sauggebläseanordnung 12 in einer Teilansicht gezeigt. Der Mähdrescher 1 umfasst eine Dreschvorrichtung 2, die als ein Mehrtrommeldreschwerk ausgeführt ist, eine Abscheidevorrichtung 3, die im dargestellten Ausführungsbeispiel mit zumindest einem nach dem Axialflussprinzip arbeitenden Trennrotor ausgeführt ist, eine Reinigungsvorrichtung 4, eine Häckselvorrichtung 5 sowie eine Verteilvorrichtung 6, die hier und vorzugsweise als Radialverteiler ausgeführt ist. Die Dreschvorrichtung 2, die Abscheidevorrichtung 3, die Reinigungsvorrichtung 4 sowie die Häckselvorrichtung 5 sind zumindest teilweise von einem - strichliniiert dargestellten - Maschinengehäuse 7 umgeben. Unterhalb der Dreschvorrichtung 2 ist ein oszillierend angetriebener Vorbereitungsboden 8 angeordnet. Unterhalb der Abscheidevorrichtung 3 ist ein ebenfalls oszillierend angetriebener Rücklaufboden 9 angeordnet, der sich im Wesentlichen parallel zu der Abscheidevorrichtung 3 erstreckt. Die Reinigungsvorrichtung 4 umfasst zumindest zwei in einem Siebkasten angeordnete Reinigungssiebe 10, die als zumindest ein Obersieb und zumindest ein darunterliegendes Untersieb ausgeführt sind. Der Vorbereitungsboden 8 liegt oberhalb der Siebebene der Reinigungsvorrichtung 4, hier des Obersiebes. Der Reinigungsvorrichtung 4 ist die Sauggebläseanordnung 12 mit zumindest einem Sauggebläse 13 nachgeordnet. Hier und vorzugsweise weist die Sauggebläseanordnung 12 zwei Sauggebläse 13 auf, welche als Reinigungsgebläse der Reinigungsvorrichtung 4 dienen. Die Sauggebläseanordnung 12 weist zumindest ein Gehäuse 14 auf, in welchem ein Läufer des zumindest einen Sauggebläses 13 um eine vertikale Rotationsachse 15 rotiert, um einen Saugluftstrom 11 durch Öffnungen 16 aus einem zumindest die Reinigungsvorrichtung 4 umgebenden Prozessraum 17 des Mähdreschers 1 anzusaugen. Der Prozessraum 17 ist durch das Maschinengehäuse 7 zumindest teilweise umschlossen.

In dem Prozessraum 17 können die Dreschvorrichtung 2, die Abscheidevorrichtung 3 und/oder die Reinigungsvorrichtung 4 angeordnet sein. Der dem Prozessraum 17 entnommene Saugluftstrom 11 durchströmt dabei unter anderem die Reinigungssiebe 10 der Reinigungsvorrichtung 4. An das jeweilige Sauggebläse 13 der Sauggebläseanordnung 12 schließt sich ein Auswurfkanal 18 an. Das zumindest eine Sauggebläse 13 der Sauggebläseanordnung 12 saugt einen Luft- und Gutstrom als Saugluftstrom 11 an, der im Wesentlichen im Bereich der Dreschvorrichtung 2 sowie der Reinigungsvorrichtung 4 als auch unterhalb des Vorbereitungsbodens 8 zugeführt wird, und leitet diesen nach dem Um- und Durchströmen des Vorbereitungsbodens 8 und der Reinigungsvorrichtung 4 durch den Auswurfkanal 18 nach außen.

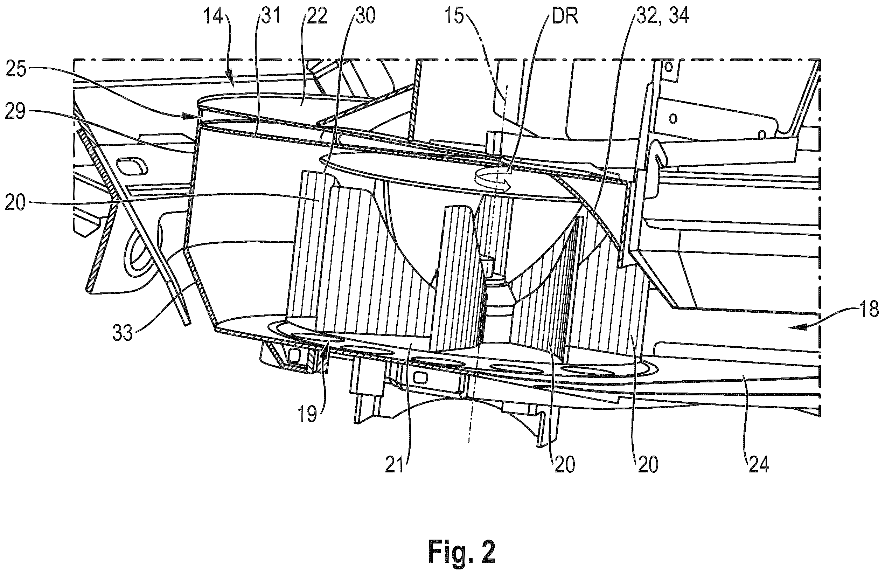

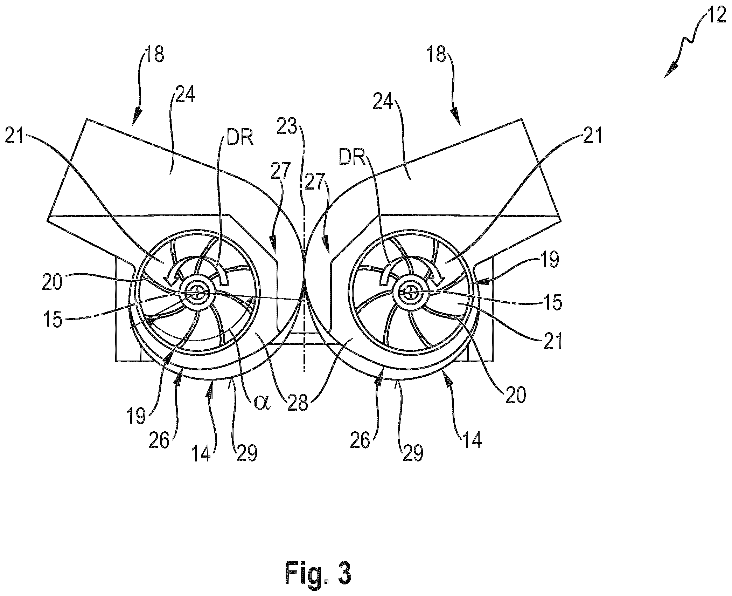

In Fig. 2 ist schematisch und exemplarisch eine Schnittansicht eines einen Läufer 19 des Sauggebläses 13 umgebenden Gehäuses 14 der Sauggebläseanordnung 12 dargestellt. Die Darstellung in Fig. 3 zeigt schematisch und exemplarisch eine Ansicht auf die Läufer 19 zweier nebeneinander angeordneter Sauggebläse 13 der Sauggebläseanordnung 12.

Die Sauggebläseanordnung 12 umfasst hier und vorzugsweise zwei nebeneinander angeordnete Sauggebläse 13 auf, die im Betrieb gegensinnig rotieren, wie durch Pfeile DR angedeutet. Die Sauggebläse 13 weisen jeweils einen um die senkrechte Rotationsachse 15 rotierenden Läufer 19 auf, wie in Fig. 3 dargestellt. Das jeweilige Sauggebläse 13 ist durch jeweils ein Gehäuse 14 umschlossen. Die im Aufbau einander entsprechenden Gehäuse 14 sind spiegelbildlich bezüglich einer Symmetrieachse 23 angeordnet. Der jeweilige einem Sauggebläse 13 zugeordnete Auswurfkanal 18 weist seitlich nach außen. Durch den Auswurfkanal 18 wird der Saugluftstrom 11 mit den darin enthaltenen Nichtkornbestandteilen im seitlichen und rückwärtigen Bereich des Mähdreschers 1 nach außen abgeführt.

Der jeweilige Läufer 19 ist mit mehreren radial orientierten Schaufeln 20 versehen, die der Förderung des von der Sauggebläseanordnung 12 angesaugten Saugluftstromes 11 dienen. Der Saugluftstrom 11 enthält umfasst im Wesentlichen Kurzstroh, Spreu und sonstige von der Reinigungsvorrichtung 4 abgeschiedene Bestandteile des gereinigten Erntegutes als Nichtkornbestandteile. Die Schaufeln 20 ragen von einer Grundplatte 21 des Läufers 19 im Wesentlichen vertikal auf. Die Läufer 19 sind durch zumindest eine zur Grundplatte 21 parallel angeordnete Abdeckung 22 obenseitig begrenzt. Unterhalb der zumindest einen Abdeckung 22 ist im Auswurfbereich des jeweiligen Läufers 19 jeweils der sich seitlich nach außen erstreckender Auswurfkanal 18 ausgebildet. Die zumindest einen Abdeckung 22 begrenzt den Auswurfkanal 18 nach oben. Nach unten ist der Auswurfkanal 18 durch ein zu der zumindest einen Abdeckung 22 parallel angeordnetes Bodensegment 24 begrenzt.

Die von der Grundplatte 21 im Wesentlichen vertikal aufragenden und sich radial nach außen erstreckenden Schaufeln 20 weisen, ausgehend von der Rotationsachse 15, einen in axialer Richtung abschnittsweise ansteigenden Konturverlauf ihrer der Abdeckung 22 zugewandten Oberkante 30 auf. Der Konturverlauf der Oberkante 30 geht in einen zur Abdeckung 22 im Wesentlichen parallelen Verlauf der Oberkante 30 im Randbereich der Schaufeln 20 über.

Das jeweilige Gehäuse 14 ist zumindest abschnittsweise spiralförmig ausgeführt. Hierzu weisen die spiralförmig ausgeführten Gehäuse 14 jeweils einen axialen Spiralabschnitt 25 und einen radialen Spiralabschnitt 26 auf, die einen sich zur Auswurföffnung 27 hin radial und axial aufweitenden Kanal 28 ausbilden.

Der radiale Spiralabschnitt 25 ist durch einen in Rotationsrichtung DR zunehmenden Radius einer den Läufer 19 abschnittsweise in Umfangsrichtung umgebenden Mantelfläche 29 ausgebildet.

Der axiale Spiralabschnitt 26 ist durch eine zur Grundplatte 21 koaxiale und unter einem Winkel zur Rotationsachse 15 geneigte Leitfläche 31 gebildet, welche das Gehäuse 14 in Rotationsrichtung DR des Läufers 19 in axialer Richtung zunehmend erweitert. Der axiale Abstand zwischen der Leitfläche 31 und der Oberkante 30 der Schaufeln 20 nimmt dabei in radialer Richtung ab.

Die zumindest abschnittsweise spiralförmige Ausführung des jeweiligen Gehäuses 14 hat den Vorteil, dass durch diese konstruktive Maßnahme die Saugleistung verbessert wird. Das sich durch den radialen Spiralabschnitt 25 und den axialen Spiralabschnitt 26 erweiternde Gehäuse 14 weist einen reduzierten Strömungswiderstand auf. Da jedoch das Gehäuse 14 nur abschnittsweise erweitert ist, kann der Bauraumbedarf dennoch gering gehalten werden.

Das Gehäuse 14 weist innenseitig eine im Bereich der Auswurföffnung 27 an der Abdeckung 22 ausgebildete, sich abschnittsweise in Umfangsrichtung des Gehäuses 14 erstreckende und zur Rotationsachse 15 geneigte obere Fase 32 auf. Die an der Abdeckung 22 ausgebildete obere Fase 32 weist ausgehend von der Auswurföffnung 27 und entgegen einer Rotationsrichtung DR des Läufers 19 einen sich verjüngenden Verlauf auf. Die obere Fase 32 erstreckt sich entlang eines Kreisbogens mit einem Mittelpunktswinkel kleiner 180°. Die obere Fase 32 kann durch ein geneigt zur Mantelfläche 29 angeordnetes Leitblech 34 ausgebildet sein, welches sich ausgehend von der Leitfläche 31 in Richtung der Mantelfläche 29 erstreckt

Die den Läufer 19 umgebende Mantelfläche 29 des Gehäuses 14 weist an ihrer der Auswurföffnung 27 gegenüberliegenden Seite eine untere Fase 33 auf. Die untere Fase 33 erstreckt sich ausgehend von einem zur Grundplatte 21 parallelen Bodensegment 24 des Gehäuses 14 abschnittsweise in Richtung der Abdeckung 22 und nimmt in radialer Richtung abschnittsweise zu. Die vom Bodensegment 24 ausgehende untere Fase 33 erstreckt sich entlang eines Kreisbogens mit einem Mittelpunktswinkel α kleiner 180°. Die untere Fase 33 kann beispielsweise als abschnittsweise Abkantung der Mantelfläche 29 ausgeführt sein.

Die untere Fase 33 ist der oberen Fase 32 im Wesentlichen diagonal gegenüberliegend am Gehäuse 14 ausgebildet. In Umfangsrichtung der Mantelfläche 29 auslaufende Enden der unteren Fase 33 sind sich verjüngend ausgebildet. Der radiale Abstand der unteren Fase 33 zum Hüllkreis der Schaufeln 20 nimmt dabei in Umfangsrichtung zu den Enden der unteren Fase 33 hin zu. Insbesondere weist das der Auswurföffnung 27 zugewandte Ende der unteren Fase 33 einen größeren radialen Abstand auf als das der Auswurföffnung 27 zugewandte Ende der unteren Fase 33.

Wie weiter aus Fig. 2 ersichtlich ist, ergibt sich aus der Ausgestaltung der Mantelfläche 29 mit der unter Fase 33 im der Auswurföffnung 27 gegenüberliegenden Bereich der Vorteil einer Bauraumreduktion. Dies ermöglicht die Anordnung eines Zugmauls am Mähdrescher 1 hinter der Sauggebläseanordnung 12. Das Umlenken des Saugluftstroms 11 und des darin enthaltenen Restgutstromes durch die untere Fase 33 nach oben in Richtung der Abdeckung 22 wird dabei durch die obere Fase 32 ausgeglichen. Die obere Fase 32 fächert den mit dem Saugluftstrom 11 transportierten Restgutstrom auf bzw. lenkt diesen nach unten in Richtung der Grundplatte 21 ab.

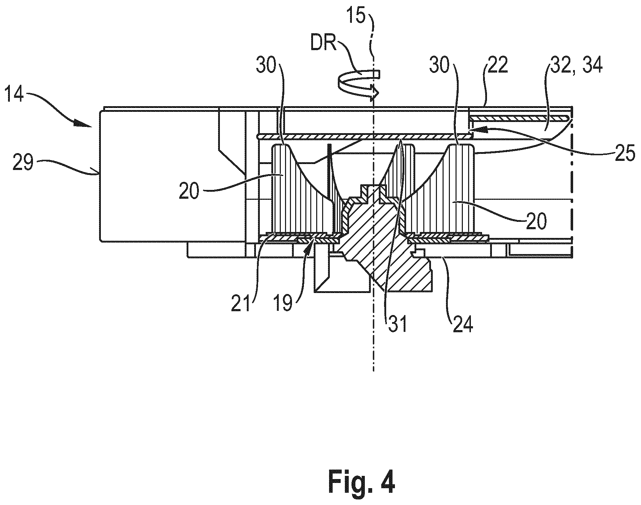

In Fig. 4 ist schematisch und exemplarisch eine Schnittansicht eines der beiden Läufer 19 dargestellt. Die zur Abdeckung 22 geneigt ausgeführte Leitfläche 31 ist, in Umfangsrichtung gesehen, der an der Abdeckung 22 ausgebildeten oberen Fase 32 im Wesentlichen gegenüberliegend angeordnet. Der vertikale Abstand zwischen der Oberkante 30 der Schaufeln 20 und der Unterseite der Leitfläche 31 ist geringer als im diagonal gegenüberliegenden Bereich des Gehäuses 14, in dem sich die obere Fase 32 befindet.

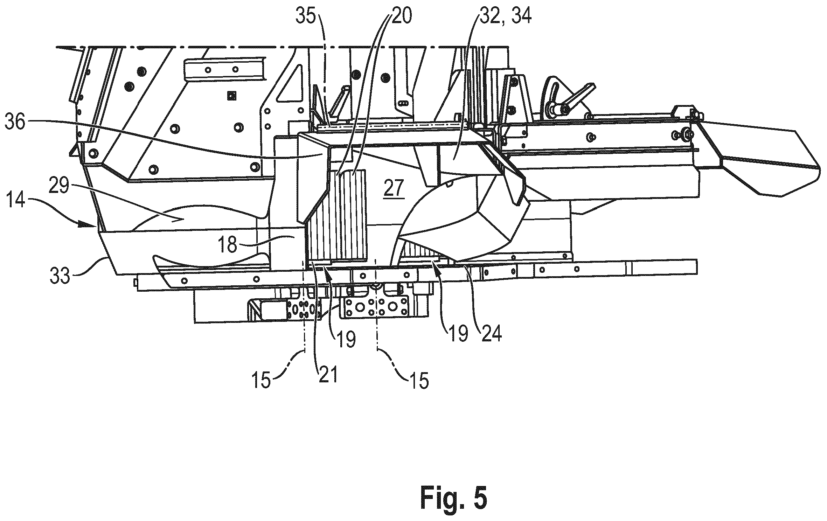

Die Darstellung in Fig. 5 zeigt schematisch und exemplarisch eine perspektivische Ansicht auf die Sauggebläseanordnung 12. Der jeweilige Auswurfkanal 18 weist an seinem seitlich nach außen gerichteten Auswurfende eine um eine horizontale Achse 35 verschwenkbare Auswurfklappe 36 auf. Die jeweilige Auswurfklappe 36 kann manuell oder durch einen Aktuator voneinander unabhängig um die horizontale Achse 35 verschwenkbar ausgeführt sein, um eine Schwenkposition relativ zu einer Auswurföffnung des Auswurfkanals 18 einzustellen.

**Bezugszeichenliste**

| | | | |
|---|---|---|---|
| 1 | Mähdrescher | 34 | Leitblech |
| 2 | Dreschvorrichtung | 35 | Horizontale Achse |
| 3 | Abscheidevorrichtung | 36 | Auswurfklappe |
| 4 | Reinigungsvorrichtung | | |
| 5 | Häckselvorrichtung | DR | Rotationsrichtung |
| 6 | Verteilvorrichtung | α | Mittelpunktswinkel |
| 7 | Maschinengehäuse | | |
| 8 | Vorbereitungsboden | | |
| 9 | Rücklaufboden | | |
| 10 | Reinigungssiebe | | |
| 11 | Saugluftstrom | | |
| 12 | Sauggebläseanordnung | | |
| 13 | Sauggebläse | | |
| 14 | Gehäuse | | |
| 15 | Rotationsachse | | |
| 16 | Öffnung | | |
| 17 | Prozessraum | | |
| 18 | Auswurfkanal | | |
| 19 | Läufer | | |
| 20 | Schaufel | | |
| 21 | Grundplatte | | |
| 22 | Abdeckung | | |
| 23 | Symmetrieachse | | |
| 24 | Bodensegment | | |
| 25 | Spiralabschnitt | | |
| 26 | Spiralabschnitt | | |
| 27 | Auswurföffnung | | |
| 28 | Kanal | | |
| 29 | Mantelfläche | | |
| 30 | Oberkante | | |
| 31 | Leitfläche | | |
| 32 | Obere Fase | | |
| 33 | Untere Fase | | |

## Patentansprüche

1. Mähdrescher (1), umfassend eine Dreschvorrichtung (2), eine Abscheidevorrichtung (3) sowie eine Reinigungsvorrichtung (4), welche Siebe (10) sowie eine den Sieben (10) der Reinigungsvorrichtung (4) nachgeordnete Sauggebläseanordnung (12) mit zumindest einem Sauggebläse (13) aufweist, welches von einem Gehäuse (14) umschlossen ist, in welchem ein Läufer (19) des zumindest einen Sauggebläses (13) um eine vertikale Rotationsachse (15) rotiert, um einen Saugluftstrom (11) aus einem zumindest die Reinigungsvorrichtung (4) umgebenden Prozessraum (17) des Mähdreschers (1) anzusaugen, wobei der Läufer (19) mit mehreren radial orientierten Schaufeln (20) versehen ist, die von einer Grundplatte (21) des Läufers (19) im Wesentlichen vertikal aufragen, wobei der Läufer (19) durch zumindest eine zur Grundplatte (21) parallel angeordnete Abdeckung (22) obenseitig begrenzt ist, wobei die Sauggebläseanordnung (12) einen aus der Sauggebläseanordnung (12) austretenden Luft- und Erntegutstrom durch eine Auswurföffnung (27) einem sich an das Gehäuse (14) anschließenden Auswurfkanal (18) zuführt, **dadurch gekennzeichnet, dass** das Gehäuse (14) zumindest abschnittsweise spiralförmig ausgeführt ist und dass das Gehäuse (14) innenseitig eine im Bereich der Auswurföffnung (27) an der Abdeckung (24) ausgebildete, sich abschnittsweise in Umfangsrichtung des Gehäuses (14) erstreckende und zur Rotationsachse (15) geneigte obere Fase (32) aufweist.

2. Mähdrescher (1) nach Anspruch 1, **dadurch gekennzeichnet, dass** die an der Abdeckung (22) ausgebildete obere Fase (32) ausgehend von der Auswurföffnung (27) und entgegen einer Rotationsrichtung (DR) des Läufers (19) einen sich verjüngenden Verlauf aufweist.

3. Mähdrescher (1) nach Anspruch 1 oder 2, **dadurch gekennzeichnet, dass** sich die obere Fase (32) entlang eines Kreisbogens mit einem Mittelpunktswinkel kleiner 180° erstreckt.

4. Mähdrescher (1) nach einem der vorangehenden Ansprüche, **dadurch gekennzeichnet, dass** das spiralförmig ausgeführte Gehäuse (14) einen axialen Spiralabschnitt (25) und einen radialen Spiralabschnitt (26) aufweist, die einen sich zur Auswurföffnung (27) hin aufweitenden Kanal (28) ausbilden.

5. Mähdrescher (1) nach Anspruch 4, **dadurch gekennzeichnet, dass** der radiale Spiralabschnitt (26) durch einen in Rotationsrichtung (DR) zunehmenden Radius einer den Läufer (19) abschnittsweise in Umfangsrichtung umgebenden Mantelfläche (29) ausgebildet ist.

6. Mähdrescher (1) nach Anspruch 5, **dadurch gekennzeichnet, dass** der axiale Spiralabschnitt (25) durch eine zur Grundplatte (21) koaxiale und unter einem Winkel zur Rotationsachse (15) geneigte Leitfläche (31) gebildet ist, welche das Gehäuse (14) in Rotationsrichtung (DR) des Läufers (19) in axialer Richtung zunehmend erweitert.

7. Mähdrescher (1) nach Anspruch 6, **dadurch gekennzeichnet, dass** die obere Fase (32) durch ein geneigt zur Mantelfläche (29) angeordnetes Leitblech (34) ausgebildet ist, welches sich ausgehend von der Leitfläche (31) in Richtung der Mantelfläche (29) erstreckt.

8. Mähdrescher (1) nach Anspruch 5, **dadurch gekennzeichnet, dass** die den Läufer (19) umgebende Mantelfläche (29) des Gehäuses (14) an ihrer der Auswurföffnung (27) gegenüberliegenden Seite eine untere Fase (33) aufweist, die sich ausgehend von einem zur Grundplatte (21) parallelen Bodensegment (24) des Gehäuses (14) abschnittsweise in Richtung der Abdeckung (22) erstreckt und in radialer Richtung abschnittsweise zunimmt.

9. Mähdrescher (1) nach Anspruch 8, **dadurch gekennzeichnet, dass** sich die vom Bodensegment (24) ausgehende untere Fase (33) entlang eines Kreisbogens mit einem Mittelpunktswinkel (α) kleiner 180° erstreckt.

10. Mähdrescher (1) nach Anspruch 8 oder 9, **dadurch gekennzeichnet, dass** in Umfangsrichtung der Mantelfläche (29) auslaufende Enden der unteren Fase (33) sich verjüngend ausgebildet sind.

11. Mähdrescher (1) nach einem der vorangehenden Ansprüche, **dadurch gekennzeichnet, dass** die von der Grundplatte (21) im Wesentlichen vertikal aufragenden Schaufeln (20), ausgehend von der Rotationsachse (15), einen in axialer Richtung abschnittsweise ansteigenden Konturverlauf ihrer der Abdeckung zugewandten Oberkante (30) aufweisen, der in einen zur Abdeckung (22) im Wesentlichen parallelen Konturverlauf der Oberkante (30) im Randbereich der Schaufeln (20) übergeht.
